# EUROPEAN PATENT SPECIFICATION

(11) **EP 4 589 281 B1**
(45) Date of publication and mention of the grant of the patent: **15.07.2026**
(21) Application number: 23887495.2
(22) Date of filing: 30.06.2023
(51) Int. Cl.: G01N 3/56, G01N 3/02, G01N 3/06, B08B 1/12, B08B 1/34, B08B 5/04, G01M 17/02, G01N 19/02

(54) **DYNAMIC FRICTION TEST MACHINE FOR RUBBER**
DYNAMISCHE REIBUNGSTESTMASCHINE FÜR GUMMI
MACHINE DE TEST DE FROTTEMENT DYNAMIQUE POUR CAOUTCHOUC

(30) Priority: 08.11.2022 CN 202211392100
(43) Date of publication of application: 23.07.2025
(73) Proprietor: Shandong Linglong Tyre Co., Ltd., Yantai, Shandong 265400 (CN)
(72) Inventor: WANG, Feng, Yantai, Shandong 265400 (CN); LI, Chaoran, Yantai, Shandong 265400 (CN); MA, Yong, Yantai, Shandong 265400 (CN); MI, Yanqing, Yantai, Shandong 265400 (CN); WU, Chenjing, Yantai, Shandong 265400 (CN); LI, Yushi, Yantai, Shandong 265400 (CN); HU, Mengyu, Yantai, Shandong 265400 (CN); ZHANG, Yao, Yantai, Shandong 265400 (CN); LIU, Xiaojing, Yantai, Shandong 265400 (CN); ZHAO, Lei, Yantai, Shandong 265400 (CN); WANG, Zijun, Yantai, Shandong 265400 (CN); LI, Li, Yantai, Shandong 265400 (CN)
(74) Representative: Bayramoglu et al.
(86) International application number: PCT/CN2023/104496
(87) International publication number: WO 2024/098799

(56) References cited:
- CN-A- 101 532 934
- CN-A- 111 289 397
- CN-A- 115 753 470
- CN-B- 112 665 840
- CN-Y- 201 004 038

## Description

### TECHNICAL FIELD

The present invention belongs to the technical field of dynamic friction test equipment for rubber, and in particular to a dynamic friction test machine for rubber.

### BACKGROUND TECHNOLOGY

The braking ability of a tire, as an extremely important indicator of tire performance, is directly related to the braking distance of a vehicle and is closely related to the personal safety of the driver and passenger. However, there are few methods to test the friction (friction coefficient) of rubber (tire) at present, and none of them can well simulate the actual running state of the tire. The means to test the related friction of tire rubber in the prior art are as follows:
1. The braking distance is tested through a real vehicle test to characterize the braking ability of a tire and reflect the friction of tire. The real vehicle test is influenced by temperature, humidity, vehicle condition, and drivers. Moreover, five test tires (four for testing and one for standby) need to be prepared for each real vehicle test, which has high test cost and long test period.
2. The laboratory anti-wear and anti-skid test machine LAT100 tests the friction of rubber test wheels under the condition of wheel locking, but under this condition, the test speed is low, and it can only be decided whether to lock the wheels before the test begins, so it is impossible to dynamically control the braking of the test wheels during the test, which is not conducive to being verified with the test results of the real vehicle.
3. Dynamic mechanical analyzer (DMA) tests the tan δ value of rubber at 25°C to predict the braking ability of rubber on dry ground. However, this data is only used to test the viscoelasticity of rubber to characterize the hysteresis friction component, but not the adhesion friction component, and cannot completely characterize the friction of rubber. Therefore, it is necessary to design a dynamic friction test machine for rubber. CN 112 665 840 B discloses another dynamic friction test machine.

### CONTENT OF THE INVENTION

An objective of the present invention is to provide a dynamic friction test machine for rubber to solve the above problems.

In order to solve the above problems, the present invention provides a technical solution of a dynamic friction test machine for rubber.

A dynamic friction test machine for rubber includes an outer housing. An internal equipment assembly is arranged in the outer housing, the outer housing is provided with a safety door, the safety door is provided with a test cabin door, the outer housing is provided with an inspection door, a dustproof plate is arranged in the outer housing, the outer housing is provided with a safety door limit switch, the dustproof plate is provided with an infrared temperature measuring device, the dustproof plate is provided with a vertical sliding plate, the dustproof plate is provided with a driving wheel shaft hole, the dustproof plate is provided with a dust remover pipe hole, the dustproof plate is provided with a dust removal brush roller hole, the dustproof plate is provided with a horizontal sliding plate, and the horizontal sliding plate is provided with a test wheel shaft hole I. The internal equipment assembly includes a base, a driving wheel system, a driven test system, and a dust removal system. The base is arranged in the outer housing, the driving wheel system is arranged on the base, the driven test system is arranged on the base, the dust removal system is arranged on the base, the base is provided with a component leg, a sliding rod is fixedly connected to the base, the base is provided with a power distribution cabinet mounting plate, the power distribution cabinet mounting plate is provided with a high-low voltage circuit and test program control system assembly, and a hydraulic system is arranged in the base.

Preferably, the safety door is provided with a test cabin door limit switch, and the test cabin door limit switch is in contact with the test cabin door and can limit the position of the test cabin door.

Preferably, the hydraulic system includes a hydraulic oil tank, a hydraulic system motor, a hydraulic oil pump, and a hydraulic oil proportional valve. The hydraulic oil tank is arranged in the base, the hydraulic system motor is arranged in the base, the hydraulic system motor is provided with the hydraulic oil pump, the hydraulic oil pump is connected to the hydraulic oil tank through a pipeline, the power distribution cabinet mounting plate is provided with the hydraulic oil proportional valve, and the hydraulic system motor can provide power for the hydraulic oil pump.

Preferably, the driving wheel system includes a driving wheel servo motor, a reducer, a clutch, a driving wheel speed torque sensor, a driving wheel shaft, a driving wheel, and a simulated pavement sandpaper. The driving wheel servo motor is arranged on the base, the driving wheel servo motor is provided with the reducer, an output shaft of the reducer is provided with the clutch, the output shaft of the reducer is provided with the driving wheel speed torque sensor, the output shaft of the reducer is provided with the driving wheel shaft, an outer side of the driving wheel shaft is provided with the driving wheel, an outer side of the driving wheel is provided with the simulated pavement sandpaper, the base is provided with a driving wheel bearing, a rotating ring of the driving wheel bearing is fixedly connected to the driving wheel shaft, and the simulated pavement sandpaper can simulate a roughness of a pavement.

Preferably, the driven test system includes a load pressure oil cylinder, a test bench, a test wheel speed torque sensor, a sensor bracket, a brake disc, a brake caliper, a test data force sensor, a load pressure sensor, a test wheel shaft, a test wheel shaft support ring, a test wheel sample, a gasket, and a fastening nut. The test bench is slidably connected to an outer side of the sliding rod, the load pressure oil cylinder is arranged on the test bench, the test wheel speed torque sensor is arranged on the test bench, the sensor bracket is arranged in the test bench, the test wheel shaft is arranged in the test bench, an input shaft of the test wheel shaft is provided with the brake disc, the test data force sensor is arranged in the test bench, the load pressure sensor is arranged on the test bench, the test wheel shaft is provided with the test wheel sample, the fastening nut is threaded with the test wheel shaft, the gasket is slidably connected to an outer side of the test wheel shaft, the test wheel sample is in contact with the gasket, the fastening nut is in contact with the gasket, and the fastening nut can limit the position of the test wheel sample.

Preferably, the test wheel shaft support ring is arranged in the test bench, the brake caliper is arranged in the test bench, the brake caliper is in contact with the brake disc, a support ring bearing is fixedly connected in the test wheel shaft support ring, the support ring bearing is in contact with the test wheel shaft, and the support ring bearing can support the test wheel shaft.

Preferably, a slip ring is fixedly connected to an outer side of the test bench, the slip ring is slidably connected to the sliding rod, a test wheel speed torque sensor slideway is arranged in the test bench, a support ring slideway is arranged on the test bench, the support ring slideway is slidably connected to the test wheel shaft support ring, the test bench is provided with a test wheel shaft hole II, a test wheel speed torque sensor slide rail is fixedly connected to the test wheel speed torque sensor, the test wheel speed torque sensor slideway is slidably connected to the test wheel speed torque sensor slide rail, the outer side of the test wheel shaft is provided with a brake disc flange, the brake disc flange is fixedly connected to the brake disc, a sample fastening pin is fixedly connected to the gasket, the sample fastening pin is slidably connected to the test wheel sample, a sensor bracket bearing is arranged in the sensor bracket, the test wheel shaft is fixedly connected in the sensor bracket bearing, the outer side of the sliding rod is provided with a driven test system displacement upper limit switch, the outer side of the sliding rod is provided with a driven test system displacement lower limit switch, and the sample fastening pin can limit the position of the test wheel sample.

Preferably, the dust removal system includes an electric dust collector, a dust brush roller, a dust suction port, a dust removal barrel fastening ring, a filter screen bracket, a dust removal barrel, a dust removal fan, a dust removal motor reducer, and a dust removal motor. The electric dust collector is arranged on the base, the dust removal brush roller is rotatably connected to the base, the electric dust collector is provided with the dust suction port, the electric dust collector is provided with the dust removal barrel, the filter screen bracket is arranged in the dust removal barrel, the dust removal barrel is provided with the dust removal barrel fastening ring, the dust removal barrel is provided with the dust removal fan, the dust removal fan is provided with the dust removal motor reducer, the dust removal motor is mounted on the base, an output shaft of the dust removal motor is fixedly connected to an input shaft of the dust removal motor reducer, the dust removal barrel fastening ring can limit the position of the dust removal barrel, and the filter screen bracket is provided with a filter screen with fine aperture.

The present invention has beneficial effects in that the present invention relates to a dynamic friction test machine for rubber, which has the characteristics of short test period and low test cost. Compared with the traditional dynamic friction test machine for rubber, the present dynamic friction test machine for rubber has the following beneficial effects:
By adding structures such as a driving wheel system, a driven test system and a dust removal system in an outer housing, the dynamic friction test machine for rubber can brake the test wheel sample during the test to obtain the test data of the dynamic friction of rubber, thereby simulating the change of the friction of the tire in the whole process (driving to braking) on real pavement, with wide test speed and pressure range, low test cost and a short test period.

### DESCRIPTION OF THE DRAWINGS

For ease of illustration, the present invention is described in detail by the following specific embodiments and drawings.
FIG. 1 is a perspective view of the overall structure of the present invention;
FIG. 2 is a schematic diagram of the internal structure of the outer housing of FIG. 1 according to the present invention;
FIG. 3 is a perspective view of the dustproof plate of FIG. 1 according to the present invention;
FIG. 4 is a schematic diagram of the internal equipment assembly of FIG. 1 according to the present invention;
FIG. 5 is a schematic view of the base of FIG. 4 according to the present invention;
FIG. 6 is a schematic structural diagram of the hydraulic system of FIG. 5 according to the present invention;
FIG. 7 is a schematic structural diagram of the driving wheel system of FIG. 4 according to the present invention;
FIG. 8 is a schematic diagram of the installation of the driving wheel system and the base of FIG. 7 according to the present invention;
FIG. 9 is a schematic structural diagram of the driven test system of FIG. 4 according to the present invention;
FIG. 10 is a schematic diagram of the test bench of FIG. 9 according to the present invention;
FIG. 11 is a schematic structural diagram of the test wheel speed torque sensor of FIG. 9 according to the present invention;
FIG. 12 is an explosive view of the test wheel shaft of FIG. 9 according to the present invention;
FIG. 13 is a schematic diagram of the sensor bracket of FIG. 9 according to the present invention;
FIG. 14 is an assembly diagram of the driven test system of FIG. 9 according to the present invention;
FIG. 15 is an assembly schematic diagram of the driven test system of FIG. 9 and the base according to the present invention;
FIG. 16 is a structural diagram of the dust removal system of FIG. 4 according to the present invention;
FIG. 17 is an explosive view of the electric dust collector of FIG. 16 according to the present invention; and
FIG. 18 is an assembly diagram of the dust removal system of FIG. 16 according to the present invention.

In the figures: 1. outer housing; 2. internal equipment assembly; 3. safety door; 4. test cabin door; 5. inspection door; 6. dustproof plate; 7. safety door limit switch; 8. test cabin door limit switch; 9. infrared temperature measuring device; 10. vertical sliding plate; 11. driving wheel shaft hole; 12. dust remover pipe hole; 13. dust removal brush roller hole; 14. horizontal sliding plate; 15. test wheel shaft hole I; 16. base; 17. driving wheel system; 18. driven test system; 19. dust removal system; 20. component leg; 21. sliding rod; 22. power distribution cabinet mounting plate; 23. high-low voltage circuit and test program control system assembly; 24. hydraulic system; 25. hydraulic oil tank; 26. hydraulic system motor; 27. hydraulic oil pump; 28. hydraulic oil proportional valve; 29. driving wheel servo motor; 30. reducer; 31. clutch; 32. driving wheel speed torque sensor; 33. driving wheel shaft; 34. driving wheel; 35. simulated pavement sandpaper; 36. driving wheel bearing; 37. load pressure oil cylinder; 38. test bench; 39. test wheel speed torque sensor; 40. sensor bracket; 41. brake disc; 42. brake caliper; 43. test data force sensor; 44. load pressure sensor; 45. test wheel shaft; 46. test wheel shaft support ring; 47. test wheel sample; 48. gasket; 49. fastening nut; 50. slip ring; 51. test wheel speed torque sensor slideway; 52. support ring slideway; 53. test wheel shaft hole II; 54. test wheel speed torque sensor slide rail; 55. brake disc flange; 56. support ring bearing; 57. sample fastening pin; 58. sensor bracket bearing; 59. driven test system displacement upper limit switch; 60. driven test system displacement lower limit switch; 61. electric dust collector; 62. dust removal brush roller; 63. dust suction port; 64. dust removal barrel fastening ring; 65. filter screen bracket; 66. dust removal barrel; 67. dust removal fan; 68. dust removal motor reducer; and 69. dust removal motor.

### IMPLEMENTATIONS

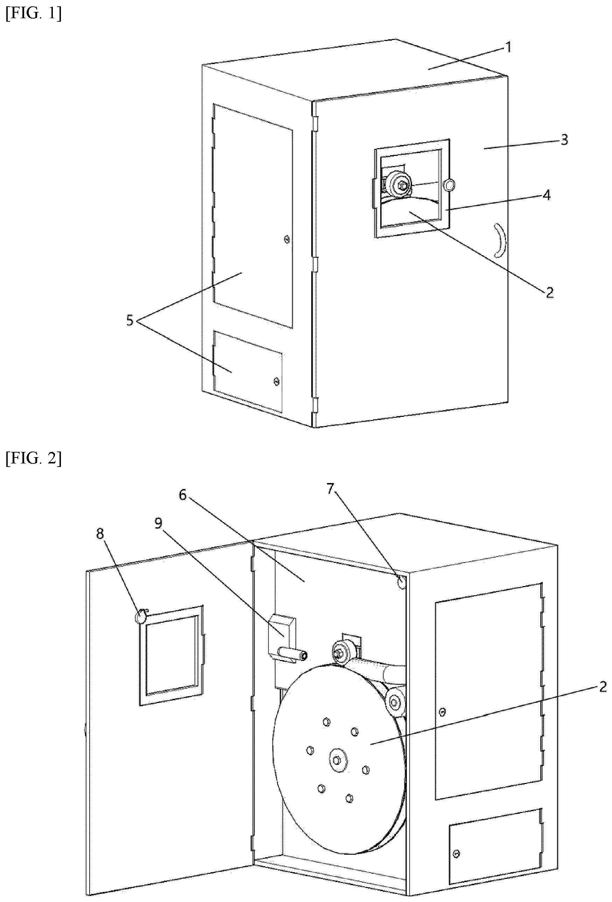

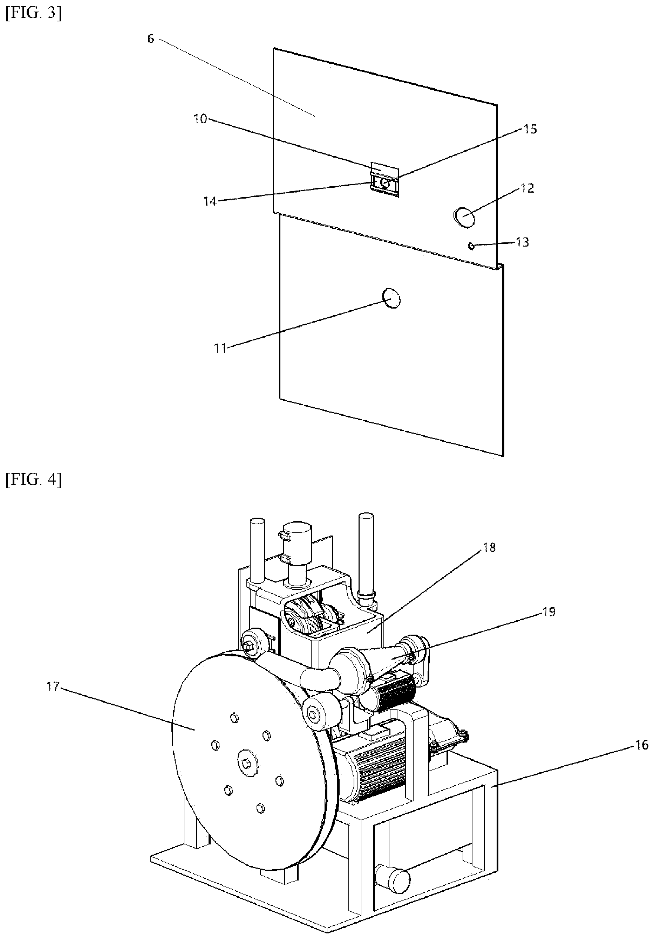

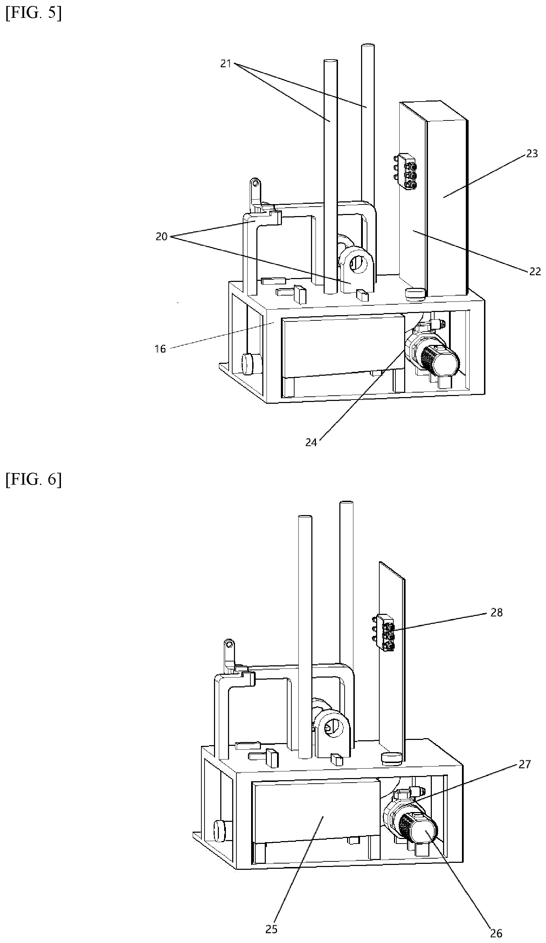

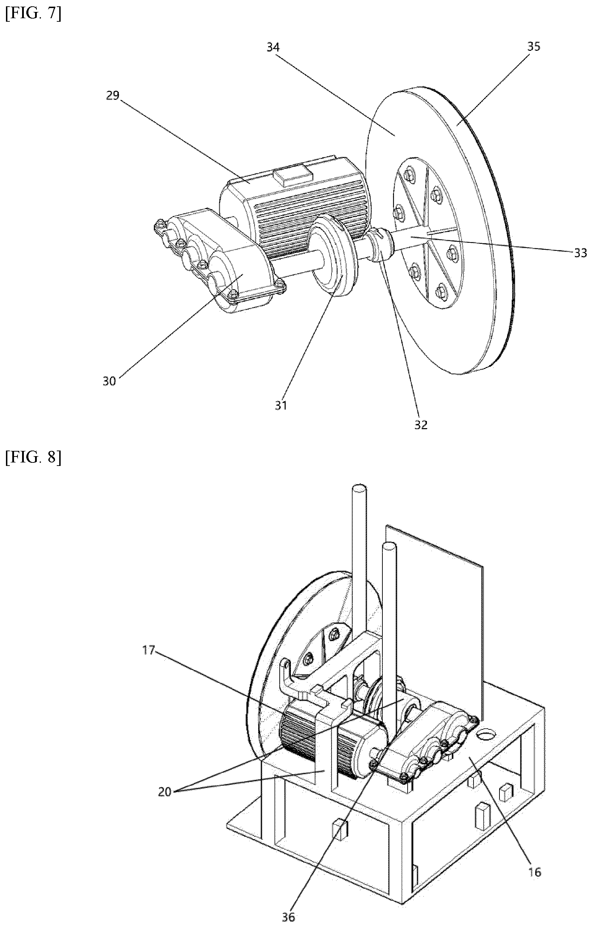

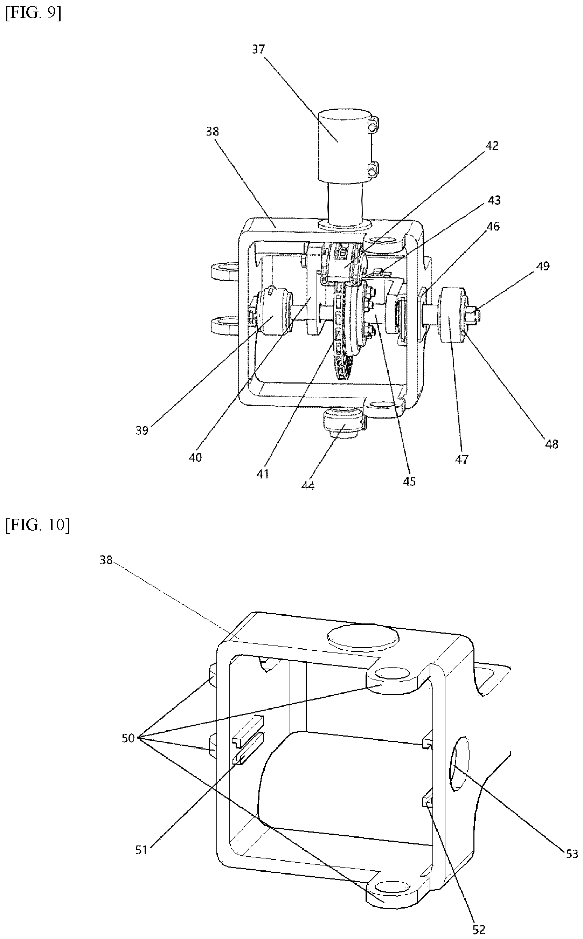

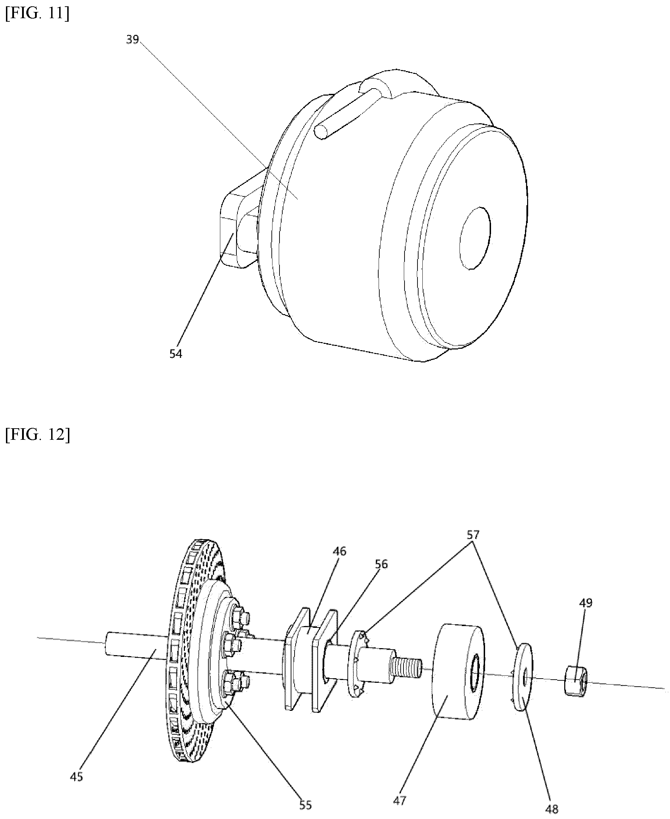

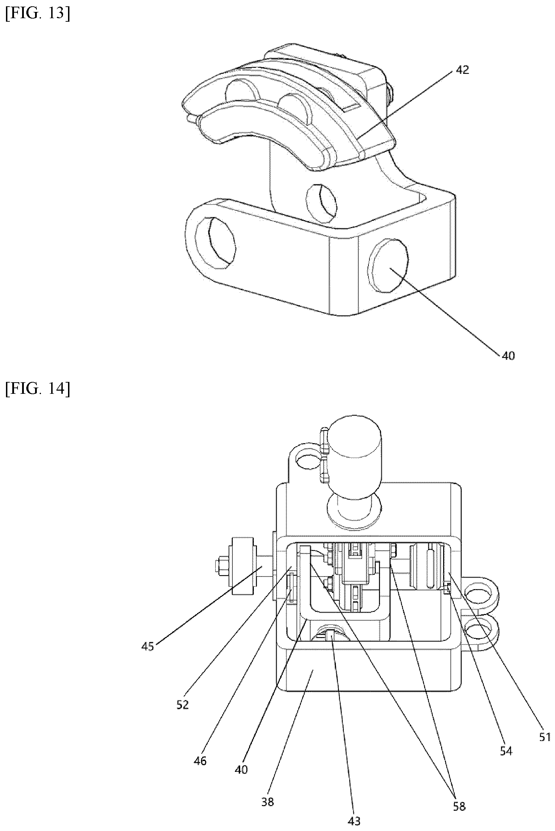

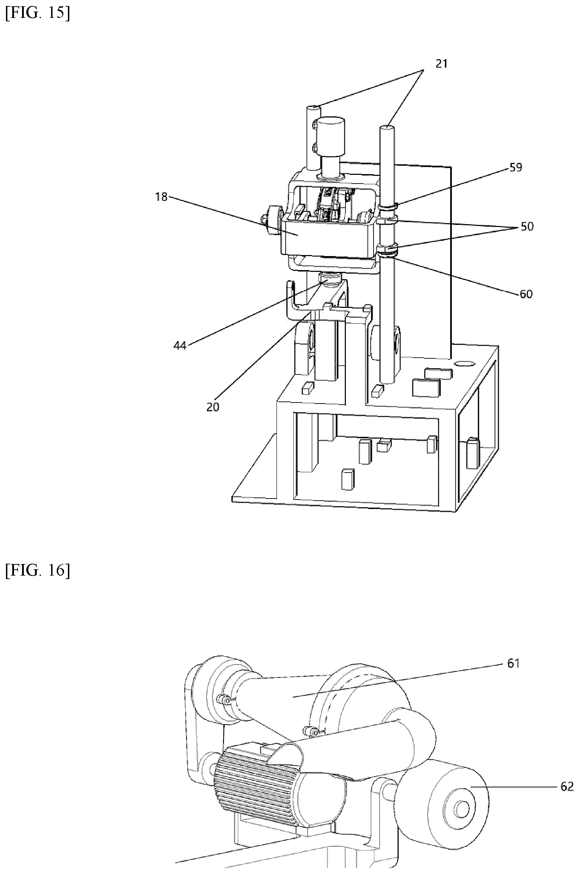

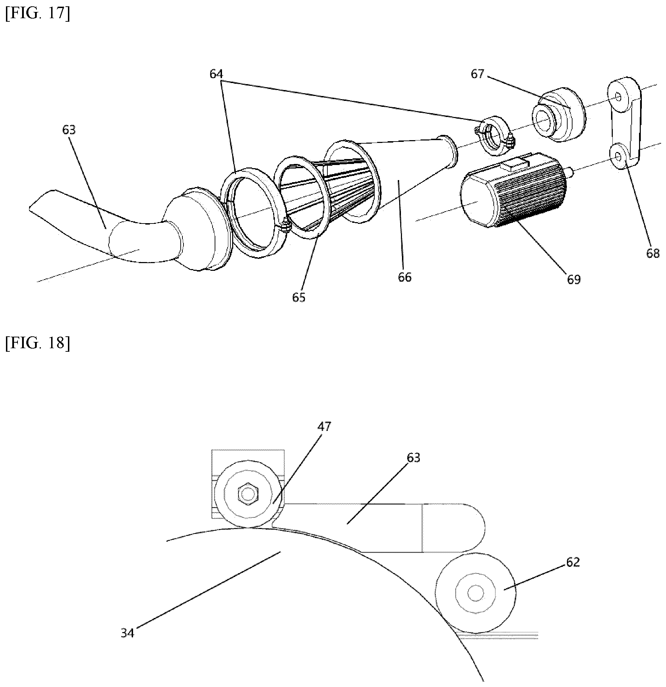

As shown in FIGS. 1-18, the specific implementation adopts the following technical solution:

### EMBODIMENT

A dynamic friction test machine for rubber includes an outer housing 1. An internal equipment assembly 2 is arranged in the outer housing 1, the outer housing 1 is provided with a safety door 3, the safety door 3 is provided with a test cabin door 4, the outer housing 1 is provided with an inspection door 5, a dustproof plate 6 is arranged in the outer housing 1, the outer housing 1 is provided with a safety door limit switch 7, the dustproof plate 6 is provided with an infrared temperature measuring device 9, the dustproof plate 6 is provided with a vertical sliding plate 10, the dustproof plate 6 is provided with a driving wheel shaft hole 11, the dustproof plate 6 is provided with a dust remover pipe hole 12, the dustproof plate 6 is provided with a dust removal brush roller hole 13, the dustproof plate 6 is provided with a horizontal sliding plate 14, and the horizontal sliding plate 14 is provided with a test wheel shaft hole I 15. The internal equipment assembly 2 includes a base 16, a driving wheel system 17, a driven test system 18, and a dust removal system 19. The base 16 is arranged in the outer housing 1, the driving wheel system 17 is arranged on the base 16, the driven test system 18 is arranged on the base 16, the dust removal system 19 is arranged on the base 16, the base 16 is provided with a component leg 20, a sliding rod 21 is fixedly connected to the base 16, the base 16 is provided with a power distribution cabinet mounting plate 22, the power distribution cabinet mounting plate 22 is provided with a high-low voltage circuit and test program control system assembly 23, and a hydraulic system 24 is arranged in the base 16.

Specifically, the safety door 3 is provided with a test cabin door limit switch 8, and the test cabin door limit switch 8 is in contact with the test cabin door 4 and can limit the position of the test cabin door 4.

Specifically, the hydraulic system 24 includes a hydraulic oil tank 25, a hydraulic system motor 26, a hydraulic oil pump 27, and a hydraulic oil proportional valve 28. The hydraulic oil tank 25 is arranged in the base 16, the hydraulic system motor 26 is arranged in the base 16, the hydraulic system motor 26 is provided with the hydraulic oil pump 27, the hydraulic oil pump 27 is connected to the hydraulic oil tank 25 through a pipeline, the power distribution cabinet mounting plate 22 is provided with the hydraulic oil proportional valve 28, and the hydraulic system motor 26 can provide power for the hydraulic oil pump 27.

Specifically, the driving wheel system 17 includes a driving wheel servo motor 29, a reducer 30, a clutch 31, a driving wheel speed torque sensor 32, a driving wheel shaft 33, a driving wheel 34, and a simulated pavement sandpaper 35. The driving wheel servo motor 29 is arranged on the base 16, the driving wheel servo motor 29 is provided with the reducer 30, an output shaft of the reducer 30 is provided with the clutch 31, the output shaft of the reducer 30 is provided with the driving wheel speed torque sensor 32, the output shaft of the reducer 30 is provided with the driving wheel shaft 33, an outer side of the driving wheel shaft 33 is provided with the driving wheel 34, an outer side of the driving wheel 34 is provided with the simulated pavement sandpaper 35, the base 16 is provided with a driving wheel bearing 36, a rotating ring of the driving wheel bearing 36 is fixedly connected to the driving wheel shaft 33, and the simulated pavement sandpaper 35 can simulate a roughness of a pavement.

Specifically, the driven test system 18 includes a load pressure oil cylinder 37, a test bench 38, a test wheel speed torque sensor 39, a sensor bracket 40, a brake disc 41, a brake caliper 42, a test data force sensor 43, a load pressure sensor 44, a test wheel shaft 45, a test wheel shaft support ring 46, a test wheel sample 47, a gasket 48, and a fastening nut 49. The test bench 38 is slidably connected to an outer side of the sliding rod 21, the load pressure oil cylinder 37 is arranged on the test bench 38, the test wheel speed torque sensor 39 is arranged on the test bench 38, the sensor bracket 40 is arranged in the test bench 38, the test wheel shaft 45 is arranged in the test bench 38, an input shaft of the test wheel shaft 45 is provided with the brake disc 41, the test data force sensor 43 is arranged in the test bench 38, the load pressure sensor 44 is arranged on the test bench 38, the test wheel shaft 45 is provided with the test wheel sample 47, the fastening nut 49 is threaded with the test wheel shaft 45, the gasket 48 is slidably connected to an outer side of the test wheel shaft 45, the test wheel sample 47 is in contact with the gasket 48, the fastening nut 49 is in contact with the gasket 48, and the fastening nut 49 can limit the position of the test wheel sample 47.

Specifically, the test wheel shaft support ring 46 is arranged in the test bench 38, the brake caliper 42 is arranged in the test bench 38, the brake caliper 42 is in contact with the brake disc 41, a support ring bearing 56 is fixedly connected in the test wheel shaft support ring 46, the support ring bearing 56 is in contact with the test wheel shaft 45, and the support ring bearing 56 can support the test wheel shaft 45.

Specifically, a slip ring 50 is fixedly connected to an outer side of the test bench 38, the slip ring 50 is slidably connected to the sliding rod 21, a test wheel speed torque sensor slideway 51 is arranged in the test bench 38, a support ring slideway 52 is arranged on the test bench 38, the support ring slideway 52 is slidably connected to the test wheel shaft support ring 46, the test bench 38 is provided with a test wheel shaft hole II 53, a test wheel speed torque sensor slide rail 54 is fixedly connected to the test wheel speed torque sensor 39, the test wheel speed torque sensor slideway 51 is slidably connected to the test wheel speed torque sensor slide rail 54, the outer side of the test wheel shaft 45 is provided with a brake disc flange 55, the brake disc flange 55 is fixedly connected to the brake disc 41, a sample fastening pin 57 is fixedly connected to the gasket 48, the sample fastening pin 57 is slidably connected to the test wheel sample 47, a sensor bracket bearing 58 is arranged in the sensor bracket 40, the test wheel shaft 45 is fixedly connected in the sensor bracket bearing 58, the outer side of the sliding rod 21 is provided with a driven test system displacement upper limit switch 59, the outer side of the sliding rod 21 is provided with a driven test system displacement lower limit switch 60, and the sample fastening pin 57 can limit the position of the test wheel sample 47.

Specifically, the dust removal system 19 includes an electric dust collector 61, a dust brush roller 62, a dust suction port 63, a dust removal barrel fastening ring 64, a filter screen bracket 65, a dust removal barrel 66, a dust removal fan 67, a dust removal motor reducer 68, and a dust removal motor 69. The electric dust collector 61 is arranged on the base 16, the dust removal brush roller 62 is rotatably connected to the base 16, the electric dust collector 61 is provided with the dust suction port 63, the electric dust collector 61 is provided with the dust removal barrel 66, the filter screen bracket 65 is arranged in the dust removal barrel 66, the dust removal barrel 66 is provided with the dust removal barrel fastening ring 64, the dust removal barrel 66 is provided with the dust removal fan 67, the dust removal fan 67 is provided with the dust removal motor reducer 68, the dust removal motor 69 is mounted on the base 16, an output shaft of the dust removal motor 69 is fixedly connected to an input shaft of the dust removal motor reducer 68, the dust removal barrel fastening ring 64 can limit the position of the dust removal barrel 66, and the filter screen bracket 65 is provided with a filter screen with fine aperture.

The use state of the present invention is as follows: Step 1, test initialization, the driven test system 18 is wholly in the uppermost position under the action of the load pressure oil cylinder 37, the driven test system displacement upper limit switch 59 is in contact with the slip ring 50 to be closed, the brake caliper 42 interacts with the brake disc 41, the test wheel shaft 45 is locked, and the clutch 31 is in a disconnected state, thus ensuring the safety of the tester and the convenience of changing samples.

Step 2, when assembling the sample, the test wheel sample 47 is tightly meshed with the test wheel shaft 45 and the gasket 48 through the joint action of screwing the fastening nut 49 and the sample fastening pin 57, so that relative displacement does not occur, and the test wheel sample 47 is prevented from falling off, slipping and flying out during the test, thus ensuring the safety of the tester, the normal operation of the test and the accuracy of the test data.

Step 3, before the test begins, it is necessary to ensure that the safety door 3 and the test cabin door 4 are completely closed, that is, the safety door limit switch 7 and the test cabin door limit switch 8 are in a closed state, otherwise, the driving wheel servo motor 29 is not energized, the clutch 31 is not closed, and the brake caliper 42 is not loosened to ensure the safety of the tester.

Step 4, during the test, the driven test system 18 moves down as a whole under the action of the load pressure oil cylinder 37, so that the test wheel sample 47 is in tight contact with the driving wheel 34, and the test pressure is fed back by the load pressure sensor 44.

Step 5, during the test, the driving wheel servo motor 29 drives the driving wheel 34 to rotate to achieve the speed required by the test, the driving wheel 34 drives the test wheel sample 47 to rotate, and the speed matching is completed between the driving wheel speed torque sensor 32 and the test wheel speed torque sensor 39.

Step 6, during the test, at the time point set by the test program, the brake caliper 42 interacts with the brake disc 41, and the test wheel sample 47 stops rotating and changes from relative rolling to relative sliding with the driving wheel 34; at this time, the test wheel sample 47, the test wheel shaft 45 and the sensor bracket 40 will have a horizontal movement trend to simulate the tire braking process.

Step 7, the vertical sliding plate 10 and the horizontal sliding plate 14 on the dustproof plate 6 ensure the vertical movement and horizontal movement trend of the driven test system 18; the horizontal sliding between the test wheel shaft support ring 46 and the support ring slideway 52, the horizontal sliding between the test wheel speed torque sensor slideway 51 and the test wheel speed torque sensor slide rail 54, and the obround test wheel shaft hole II 53 ensure that the test wheel sample 47, the test wheel shaft 45 and the sensor bracket 40 have the ability to move horizontally.

Step 8, during the test, if the driven test system displacement lower limit switch 60 is in contact with the slip ring 50 to be closed, the test will stop immediately, data are recorded and saved, and the instrument will return to an initial state of the test to protect the machine from damage.

Step 9, during the test, the load pressure sensor 44 monitors the load pressure of the test wheel sample 47 during the whole test and feeds back to the load pressure oil cylinder 37 to perform adjustment in real time, so as to ensure that the test load pressure is equal to the set pressure in real time; the test data force sensor 43 monitors the horizontal force change of the test wheel sample 47 during the whole test and records the test data; the infrared temperature measuring device 9 monitors the temperature change of the test wheel sample 47 during the whole test and records the test data; the dust removal system 19 collects the rubber crumbs produced during the whole test, and the rubber crumbs can be used for the research of abrasive debris.

Step 10, the pressure sources of the load pressure oil cylinder 37 and the brake caliper 42 are provided by the hydraulic oil pump 27 and distributed and regulated by the hydraulic oil proportional valve 28.

Step 11, the test environment under different pavement conditions can be simulated by replacing the simulated road sandpaper 35 with different meshes.

The basic principles, main features, and advantages of the present invention have been shown and described above. It should be understood by those skilled in the art that the present invention is not limited by the above-mentioned embodiment, and what is described in the above-mentioned embodiment and description only illustrates the principles of the present invention. Without departing from the scope of the present invention, there will be various changes and improvements in the present invention, and these changes and improvements shall fall within the scope of the claimed invention, which is defined by the appended claims.

## Claims

1. A dynamic friction test machine for rubber, comprising an outer housing (1), **characterized in that** an internal equipment assembly (2) is arranged in the outer housing (1), the outer housing (1) is provided with a safety door (3), the safety door (3) is provided with a test cabin door (4), the outer housing (1) is provided with an inspection door (5), a dustproof plate (6) is arranged in the outer housing (1), the outer housing (1) is provided with a safety door limit switch (7), the dustproof plate (6) is provided with an infrared temperature measuring device (9), the dustproof plate (6) is provided with a vertical sliding plate (10), the dustproof plate (6) is provided with a driving wheel shaft hole (11), the dustproof plate (6) is provided with a dust remover pipe hole (12), the dustproof plate (6) is provided with a dust removal brush roller hole (13), the dustproof plate (6) is provided with a horizontal sliding plate (14), and the horizontal sliding plate (14) is provided with a test wheel shaft hole I (15); the internal equipment assembly (2) comprises a base (16), a driving wheel system (17), a driven test system (18), and a dust removal system (19); the base (16) is arranged in the outer housing (1), the driving wheel system (17) is arranged on the base (16), the driven test system (18) is arranged on the base (16), the dust removal system (19) is arranged on the base (16), the base (16) is provided with a component leg (20), a sliding rod (21) is fixedly connected to the base (16), the base (16) is provided with a power distribution cabinet mounting plate (22), the power distribution cabinet mounting plate (22) is provided with a high-low voltage circuit and test program control system assembly (23), and a hydraulic system (24) is arranged in the base (16).

2. The dynamic friction test machine for rubber according to claim 1, **characterized in that** the safety door (3) is provided with a test cabin door limit switch (8), and the test cabin door limit switch (8) is in contact with the test cabin door (4).

3. The dynamic friction test machine for rubber according to claim 1, **characterized in that** the hydraulic system (24) comprises a hydraulic oil tank (25), a hydraulic system motor (26), a hydraulic oil pump (27), and a hydraulic oil proportional valve (28); the hydraulic oil tank (25) is arranged in the base (16), the hydraulic system motor (26) is arranged in the base (16), the hydraulic system motor (26) is provided with the hydraulic oil pump (27), the hydraulic oil pump (27) is connected to the hydraulic oil tank (25) through a pipeline, and the power distribution cabinet mounting plate (22) is provided with the hydraulic oil proportional valve (28).

4. The dynamic friction test machine for rubber according to claim 1, **characterized in that** the driving wheel system (17) comprises a driving wheel servo motor (29), a reducer (30), a clutch (31), a driving wheel speed torque sensor (32), a driving wheel shaft (33), a driving wheel (34), and a simulated pavement sandpaper (35); the driving wheel servo motor (29) is arranged on the base (16), the driving wheel servo motor (29) is provided with the reducer (30), an output shaft of the reducer (30) is provided with the clutch (31), the output shaft of the reducer (30) is provided with the driving wheel speed torque sensor (32), the output shaft of the reducer (30) is provided with the driving wheel shaft (33), an outer side of the driving wheel shaft (33) is provided with the driving wheel (34), an outer side of the driving wheel (34) is provided with the simulated pavement sandpaper (35), the base (16) is provided with a driving wheel bearing (36), and a rotating ring of the driving wheel bearing (36) is fixedly connected to the driving wheel shaft (33).

5. The dynamic friction test machine for rubber according to claim 1, **characterized in that** the driven test system (18) comprises a load pressure oil cylinder (37), a test bench (38), a test wheel speed torque sensor (39), a sensor bracket (40), a brake disc (41), a brake caliper (42), a test data force sensor (43), a load pressure sensor (44), a test wheel shaft (45), a test wheel shaft support ring (46), a test wheel sample (47), a gasket (48), and a fastening nut (49); the test bench (38) is slidably connected to an outer side of the sliding rod (21), the load pressure oil cylinder (37) is arranged on the test bench (38), the test wheel speed torque sensor (39) is arranged on the test bench (38), the sensor bracket (40) is arranged in the test bench (38), the test wheel shaft (45) is arranged in the test bench (38), an input shaft of the test wheel shaft (45) is provided with the brake disc (41), the test data force sensor (43) is arranged in the test bench (38), the load pressure sensor (44) is arranged on the test bench (38), the test wheel shaft (45) is provided with the test wheel sample (47), the fastening nut (49) is threaded with the test wheel shaft (45), the gasket (48) is slidably connected to an outer side of the test wheel shaft (45), the test wheel sample (47) is in contact with the gasket (48), and the fastening nut (49) is in contact with the gasket (48).

6. The dynamic friction test machine for rubber according to claim 5, **characterized in that** the test wheel shaft support ring (46) is arranged in the test bench (38), the brake caliper (42) is arranged in the test bench (38), the brake caliper (42) is in contact with the brake disc (41), a support ring bearing (56) is fixedly connected in the test wheel shaft support ring (46), and the support ring bearing (56) is in contact with the test wheel shaft (45).

7. The dynamic friction test machine for rubber according to claim 5, **characterized in that** a slip ring (50) is fixedly connected to an outer side of the test bench (38), the slip ring (50) is slidably connected to the sliding rod (21), a test wheel speed torque sensor slideway (51) is arranged in the test bench (38), a support ring slideway (52) is arranged on the test bench (38), the support ring slideway (52) is slidably connected to the test wheel shaft support ring (46), the test bench (38) is provided with a test wheel shaft hole II (53), a test wheel speed torque sensor slide rail (54) is fixedly connected to the test wheel speed torque sensor (39), the test wheel speed torque sensor slideway (51) is slidably connected to the test wheel speed torque sensor slide rail (54), the outer side of the test wheel shaft (45) is provided with a brake disc flange (55), the brake disc flange (55) is fixedly connected to the brake disc (41), a sample fastening pin (57) is fixedly connected to the gasket (48), the sample fastening pin (57) is slidably connected to the test wheel sample (47), a sensor bracket bearing (58) is arranged in the sensor bracket (40), the test wheel shaft (45) is fixedly connected in the sensor bracket bearing (58), the outer side of the sliding rod (21) is provided with a driven test system displacement upper limit switch (59), and the outer side of the sliding rod (21) is provided with a driven test system displacement lower limit switch (60).

8. The dynamic friction test machine for rubber according to claim 1, **characterized in that** the dust removal system (19) comprises an electric dust collector (61), a dust brush roller (62), a dust suction port (63), a dust removal barrel fastening ring (64), a filter screen bracket (65), a dust removal barrel (66), a dust removal fan (67), a dust removal motor reducer (68), and a dust removal motor (69); the electric dust collector (61) is arranged on the base (16), the dust removal brush roller (62) is rotatably connected to the base (16), the electric dust collector (61) is provided with the dust suction port (63), the electric dust collector (61) is provided with the dust removal barrel (66), the filter screen bracket (65) is arranged in the dust removal barrel (66), the dust removal barrel (66) is provided with the dust removal barrel fastening ring (64), the dust removal barrel (66) is provided with the dust removal fan (67), the dust removal fan (67) is provided with the dust removal motor reducer (68), the dust removal motor (69) is mounted on the base (16), and an output shaft of the dust removal motor (69) is fixedly connected to an input shaft of the dust removal motor reducer (68).

## Patentansprüche

1. Dynamische Reibungsprüfmaschine für Gummi, umfassend ein Außengehäuse (1), **dadurch gekennzeichnet, dass** eine interne Ausrüstungsbaugruppe (2) in dem Außengehäuse (1) angeordnet ist, wobei das Außengehäuse (1) mit einer Sicherheitstür (3) versehen ist, wobei die Sicherheitstür (3) mit einer Prüfkabinentür (4) versehen ist, wobei das Außengehäuse (1) mit einer Inspektionstür (5) versehen ist, wobei eine Staubschutzplatte (6) in dem Außengehäuse (1) angeordnet ist, wobei das Außengehäuse (1) mit einem Sicherheitstür-Endschalter (7) versehen ist, wobei die Staubschutzplatte (6) mit einer Infrarot-Temperaturmessvorrichtung (9) versehen ist, wobei die Staubschutzplatte (6) mit einer vertikalen Gleitplatte (10) versehen ist, wobei die Staubschutzplatte (6) mit einem Antriebsradwellenloch (11) versehen ist, wobei die Staubschutzplatte (6) mit einem Staubentfernerrohrloch (12) versehen ist, wobei die Staubschutzplatte (6) mit einem Staubentfernungs-Bürstenwalzenloch (13) versehen ist, wobei die Staubschutzplatte (6) mit einer horizontalen Gleitplatte (14) versehen ist, und wobei die horizontale Gleitplatte (14) mit einem Prüfradwellenloch I (15) versehen ist; wobei die interne Ausrüstungsbaugruppe (2) eine Grundplatte (16), ein Antriebsradsystem (17), ein angetriebenes Prüfsystem (18) und ein Staubentfernungssystem (19) umfasst; wobei die Grundplatte (16) in dem Außengehäuse (1) angeordnet ist, wobei das Antriebsradsystem (17) auf der Grundplatte (16) angeordnet ist, wobei das angetriebene Prüfsystem (18) auf der Grundplatte (16) angeordnet ist, wobei das Staubentfernungssystem (19) auf der Grundplatte (16) angeordnet ist, wobei die Grundplatte (16) mit einem Bauteilfuß (20) versehen ist, wobei eine Gleitstange (21) fest mit der Grundplatte (16) verbunden ist, wobei die Grundplatte (16) mit einer Montageplatte für einen Energieverteilungsschrank (22) versehen ist, wobei die Montageplatte für einen Energieverteilungsschrank (22) mit einer Hoch-/Niederspannungsschaltung und einer Prüprogramm-Steuersystembaugruppe (23) versehen ist, und wobei ein Hydrauliksystem (24) in der Grundplatte (16) angeordnet ist.

2. Dynamische Reibungsprüfmaschine für Gummi nach Anspruch 1, **dadurch gekennzeichnet, dass** die Sicherheitstür (3) mit einem Prüfkabinentür-Endschalter (8) versehen ist und der Prüfkabinentür-Endschalter (8) mit der Prüfkabinentür (4) in Kontakt steht.

3. Dynamische Reibungsprüfmaschine für Gummi nach Anspruch 1, **dadurch gekennzeichnet, dass** das Hydrauliksystem (24) einen Hydrauliköltank (25), einen Hydrauliksystemmotor (26), eine Hydraulikölpumpe (27) und ein Hydrauliköl-Proportionalventil (28) umfasst; wobei der Hydrauliköltank (25) in der Grundplatte (16) angeordnet ist, wobei der Hydrauliksystemmotor (26) in der Grundplatte (16) angeordnet ist, wobei der Hydrauliksystemmotor (26) mit der Hydraulikölpumpe (27) versehen ist, wobei die Hydraulikölpumpe (27) durch eine Rohrleitung mit dem Hydrauliköltank (25) verbunden ist, und wobei die Montageplatte für einen Energieverteilungsschrank (22) mit dem Hydrauliköl-Proportionalventil (28) versehen ist.

4. Dynamische Reibungsprüfmaschine für Gummi nach Anspruch 1, **dadurch gekennzeichnet, dass** das Antriebsradsystem (17) einen Antriebsrad-Servomotor (29), ein Untersetzungsgetriebe (30), eine Kupplung (31), einen Antriebsrad-Geschwindigkeits-/Drehmomentsensor (32), eine Antriebsradwelle (33), ein Antriebsrad (34) und ein simuliertes Fahrbahnschleifpapier (35) umfasst; wobei der Antriebsrad-Servomotor (29) auf der Grundplatte (16) angeordnet ist, wobei der Antriebsrad-Servomotor (29) mit dem Untersetzungsgetriebe (30) versehen ist, wobei eine Ausgangswelle des Untersetzungsgetriebes (30) mit der Kupplung (31) versehen ist, wobei die Ausgangswelle des Untersetzungsgetriebes (30) mit dem Antriebsrad-Geschwindigkeits-/Drehmomentsensor (32) versehen ist, wobei die Ausgangswelle des Untersetzungsgetriebes (30) mit der Antriebsradwelle (33) versehen ist, wobei eine Außenseite der Antriebsradwelle (33) mit dem Antriebsrad (34) versehen ist, wobei eine Außenseite des Antriebsrads (34) mit dem simulierten Fahrbahnschleifpapier (35) versehen ist, wobei die Grundplatte (16) mit einem Antriebsradlager (36) versehen ist, und wobei ein Drehring des Antriebsradlagers (36) fest mit der Antriebsradwelle (33) verbunden ist.

5. Dynamische Reibungsprüfmaschine für Gummi nach Anspruch 1, **dadurch gekennzeichnet, dass** das angetriebene Prüfsystem (18) einen Lastdruckölzylinder (37), einen Prüfstand (38), einen Prüfrad-Geschwindigkeits-/Drehmomentsensor (39), einen Sensorträger (40), eine Bremsscheibe (41), einen Bremssattel (42), einen Testdaten-Kraftsensor (43), einen Lastdrucksensor (44), eine Prüfradwelle (45), einen Prüfradwellen-Stützring (46), eine Prüfradprobe (47), eine Dichtung (48) und eine Befestigungsmutter (49) umfasst; wobei der Prüfstand (38) gleitend mit einer Außenseite der Gleitstange (21) verbunden ist, wobei der Lastdruckölzylinder (37) auf dem Prüfstand (38) angeordnet ist, wobei der Prüfrad-Geschwindigkeits-/Drehmomentsensor (39) auf dem Prüfstand (38) angeordnet ist, wobei der Sensorträger (40) in dem Prüfstand (38) angeordnet ist, wobei die Prüfradwelle (45) in dem Prüfstand (38) angeordnet ist, wobei ein Eingangsende der Prüfradwelle (45) mit der Bremsscheibe (41) versehen ist, wobei der Testdaten-Kraftsensor (43) in dem Prüfstand (38) angeordnet ist, wobei der Lastdrucksensor (44) auf dem Prüfstand (38) angeordnet ist, wobei die Prüfradwelle (45) mit der Prüfradprobe (47) versehen ist, wobei die Befestigungsmutter (49) mit der Prüfradwelle (45) verschraubt ist, wobei die Dichtung (48) gleitend mit einer Außenseite der Prüfradwelle (45) verbunden ist, wobei die Prüfradprobe (47) mit der Dichtung (48) in Kontakt steht, und wobei die Befestigungsmutter (49) mit der Dichtung (48) in Kontakt steht.

6. Dynamische Reibungsprüfmaschine für Gummi nach Anspruch 5, **dadurch gekennzeichnet, dass** der Prüfradwellen-Stützring (46) in dem Prüfstand (38) angeordnet ist, wobei der Bremssattel (42) in dem Prüfstand (38) angeordnet ist, wobei der Bremssattel (42) mit der Bremsscheibe (41) in Kontakt steht, wobei ein Stützringlager (56) fest in dem Prüfradwellen-Stützring (46) verbunden ist, und wobei das Stützringlager (56) mit der Prüfradwelle (45) in Kontakt steht.

7. Dynamische Reibungsprüfmaschine für Gummi nach Anspruch 5, **dadurch gekennzeichnet, dass** ein Schleifring (50) fest mit einer Außenseite des Prüfstands (38) verbunden ist, wobei der Schleifring (50) gleitend mit der Gleitstange (21) verbunden ist, wobei eine Prüfrad-Geschwindigkeits-/Drehmomentsensor-Gleitbahn (51) in dem Prüfstand (38) angeordnet ist, wobei eine Stützring-Gleitbahn (52) auf dem Prüfstand (38) angeordnet ist, wobei die Stützring-Gleitbahn (52) gleitend mit dem Prüfradwellen-Stützring (46) verbunden ist, wobei der Prüfstand (38) mit einem Prüfradwellenloch II (53) versehen ist, wobei eine Prüfrad-Geschwindigkeits-/Drehmomentsensor-Gleitschiene (54) fest mit dem Prüfrad-Geschwindigkeits-/Drehmomentsensor (39) verbunden ist, wobei die Prüfrad-Geschwindigkeits-/Drehmomentsensor-Gleitbahn (51) gleitend mit der Prüfrad-Geschwindigkeits-/Drehmomentsensor-Gleitschiene (54) verbunden ist, wobei die Außenseite der Prüfradwelle (45) mit einem Bremsscheibenflansch (55) versehen ist, wobei der Bremsscheibenflansch (55) fest mit der Bremsscheibe (41) verbunden ist, wobei ein Probenbefestigungsstift (57) fest mit der Dichtung (48) verbunden ist, wobei der Probenbefestigungsstift (57) gleitend mit der Prüfradprobe (47) verbunden ist, wobei ein Sensorträgerlager (58) in dem Sensorträger (40) angeordnet ist, wobei die Prüfradwelle (45) fest mit dem Sensorträgerlager (58) verbunden ist, wobei die Außenseite der Gleitstange (21) mit einem oberen Verschiebungsgrenzschalter des angetriebenen Prüfsystems (59) versehen ist, und wobei die Außenseite der Gleitstange (21) mit einem unteren Verschiebungsgrenzschalter des angetriebenen Prüfsystems (60) versehen ist.

8. Dynamische Reibungsprüfmaschine für Gummi nach Anspruch 1, **dadurch gekennzeichnet, dass** das Staubentfernungssystem (19) einen elektrischen Staubsammler (61), eine Staubentfernungs-Bürstenwalze (62), eine Staubansaugöffnung (63), einen Staubentfernungsbehälter-Befestigungsring (64), eine Filtersiebhalterung (65), einen Staubentfernungsbehälter (66), ein Staubabsauggebläse (67), ein Staubentfernungsmotor-Untersetzungsgetriebe (68) und einen Staubentfernungsmotor (69) umfasst; wobei der elektrische Staubsammler (61) auf der Grundplatte (16) angeordnet ist, wobei die Staubentfernungs-Bürstenwalze (62) drehbar mit der Grundplatte (16) verbunden ist, wobei der elektrische Staubsammler (61) mit der Staubansaugöffnung (63) versehen ist, wobei der elektrische Staubsammler (61) mit dem Staubentfernungsbehälter (66) versehen ist, wobei die Filtersiebhalterung (65) in dem Staubentfernungsbehälter (66) angeordnet ist, wobei der Staubentfernungsbehälter (66) mit dem Staubentfernungsbehälter-Befestigungsring (64) versehen ist, wobei der Staubentfernungsbehälter (66) mit dem Staubabsauggebläse (67) versehen ist, wobei das Staubabsauggebläse (67) mit dem Staubentfernungsmotor-Untersetzungsgetriebe (68) versehen ist, wobei der Staubentfernungsmotor (69) auf der Grundplatte (16) montiert ist, und wobei eine Ausgangswelle des Staubentfernungsmotors (69) fest mit einer Eingangswelle des Staubentfernungsmotor-Untersetzungsgetriebes (68) verbunden ist.

## Revendications

1. Machine de test de frottement dynamique pour caoutchouc, comprenant un boîtier externe (1), **caractérisée en ce qu'**un ensemble d'équipements internes (2) est disposé dans le boîtier externe (1), le boîtier externe (1) est pourvu d'une porte de sécurité (3), la porte de sécurité (3) est pourvue d'une porte de cabine de test (4), le boîtier externe (1) est pourvu d'une porte d'inspection (5), une plaque anti-poussière (6) est disposée dans le boîtier externe (1), le boîtier externe (1) est pourvu d'un interrupteur de fin de course de porte de sécurité (7), la plaque anti-poussière (6) est pourvue d'un dispositif de mesure de température infrarouge (9), la plaque anti-poussière (6) est pourvue d'une plaque coulissante verticale (10), la plaque anti-poussière (6) est pourvue d'un trou d'arbre de roue motrice (11), la plaque anti-poussière (6) est pourvue d'un trou de tuyau de dépoussiérage (12), la plaque anti-poussière (6) est pourvue d'un trou de rouleau de brosse de dépoussiérage (13), la plaque anti-poussière (6) est pourvue d'une plaque coulissante horizontale (14), et la plaque coulissante horizontale (14) est pourvue percée d'un trou I d'arbre de roue de test (15) ; l'ensemble d'équipements internes (2) comprend une base (16), un système de roue motrice (17), un système de test entraîné (18) et un système de dépoussiérage (19) ; la base (16) est disposée dans le boîtier externe (1), le système de roue motrice (17) est disposé sur la base (16), le système de test entraîné (18) est disposé sur la base (16), le système de dépoussiérage (19) est disposé sur la base (16), la base (16) est pourvue d'un pied de composant (20), une tige coulissante (21) est reliée de manière fixe à la base (16), la base (16) est pourvue d'une plaque de montage d'armoire de distribution électrique (22), la plaque de montage d'armoire de distribution électrique (22) est pourvue d'un circuit haute/basse tension et d'un ensemble système de commande de programme de test (23), et un système hydraulique (24) est disposé dans la base (16).

2. Machine de test de frottement dynamique pour caoutchouc selon la revendication 1, **caractérisée en ce que** la porte de sécurité (3) est pourvue d'un interrupteur de fin de course de porte de cabine de test (8), et l'interrupteur de fin de course de porte de cabine de test (8) est en contact avec la porte de cabine de test (4).

3. Machine de test de frottement dynamique pour caoutchouc selon la revendication 1, **caractérisée en ce que** le système hydraulique (24) comprend un réservoir d'huile hydraulique (25), un moteur de système hydraulique (26), une pompe à huile hydraulique (27) et une vanne proportionnelle d'huile hydraulique (28) ; le réservoir d'huile hydraulique (25) est disposé dans la base (16), le moteur de système hydraulique (26) est disposé dans la base (16), le moteur de système hydraulique (26) est pourvu de la pompe à huile hydraulique (27), la pompe à huile hydraulique (27) est reliée au réservoir d'huile hydraulique (25) à travers une conduite, et la plaque de montage d'armoire de distribution électrique (22) est pourvue de la vanne proportionnelle d'huile hydraulique (28).

4. Machine de test de frottement dynamique pour caoutchouc selon la revendication 1, **caractérisée en ce que** le système de roue motrice (17) comprend un servomoteur de roue motrice (29), un réducteur (30), un embrayage (31), un capteur de vitesse-couple de roue motrice (32), un arbre de roue motrice (33), une roue motrice (34) et un papier de verre simulant le revêtement (35) ; le servomoteur de roue motrice (29) est disposé sur la base (16), le servomoteur de roue motrice (29) est pourvu du réducteur (30), un arbre de sortie du réducteur (30) est pourvu de l'embrayage (31), l'arbre de sortie du réducteur (30) est pourvu du capteur de vitesse-couple de roue motrice (32), l'arbre de sortie du réducteur (30) est pourvu de l'arbre de roue motrice (33), un côté externe de l'arbre de roue motrice (33) est pourvu de la roue motrice (34), un côté externe de la roue motrice (34) est pourvu du papier de verre simulant le revêtement (35), la base (16) est pourvue d'un palier de roue motrice (36), et une bague rotative du palier de roue motrice (36) est reliée de manière fixe à l'arbre de roue motrice (33).

5. Machine de test de frottement dynamique pour caoutchouc selon la revendication 1, **caractérisée en ce que** le système de test entraîné (18) comprend un vérin hydraulique de pression de charge (37), un banc de test (38), un capteur de vitesse-couple de roue de test (39), un support de capteur (40), un disque de frein (41), un étrier de frein (42), un capteur de force de données de test (43), un capteur de pression de charge (44), un arbre de roue de test (45), une bague de support d'arbre de roue de test (46), un échantillon de roue de test (47), un joint (48) et un écrou de fixation (49) ; le banc de test (38) est relié de manière coulissante au côté externe de la tige coulissante (21), le vérin hydraulique de pression de charge (37) est disposé sur le banc de test (38), le capteur de vitesse-couple de roue de test (39) est disposé sur le banc de test (38), le support de capteur (40) est disposé dans le banc de test (38), l'arbre de roue de test (45) est disposé dans le banc de test (38), un arbre d'entrée de l'arbre de roue de test (45) est prévu avec le disque de frein (41), le capteur de force de données de test (43) est disposé dans le banc de test (38), le capteur de pression de charge (44) est disposé sur le banc de test (38), l'arbre de roue de test (45) est pourvu de l'échantillon de roue de test (47), l'écrou de fixation (49) est vissé sur l'arbre de roue de test (45), le joint (48) est relié de manière coulissante à un côté externe de l'arbre de roue de test (45), L'échantillon de roue de test (47) est en contact avec le joint (48), et l'écrou de fixation (49) est en contact avec le joint (48).

6. Machine de test de frottement dynamique pour caoutchouc selon la revendication 5, **caractérisée en ce que** la bague de support d'arbre de roue de test (46) est disposée dans le banc de test (38), l'étrier de frein (42) est disposé dans le banc de test (38), l'étrier de frein (42) est en contact avec le disque de frein (41), un palier de bague de support (56) est relié de manière fixe dans la bague de support d'arbre de roue de test (46), et le palier de bague de support (56) est en contact avec l'arbre de roue de test (45).

7. Machine de test de frottement dynamique pour caoutchouc selon la revendication 5, **caractérisée en ce qu'**une bague de glissement (50) est reliée de manière fixe à un côté externe du banc de test (38), la bague de glissement (50) est reliée de manière coulissante à la tige coulissante (21), une glissière de capteur de vitesse-couple de roue de test (51) est disposée dans le banc de test (38), une glissière de bague de guidage (52) est disposée sur le banc de test (38), la glissière de bague de guidage (52) est reliée de manière coulissante à la bague de support d'arbre de roue de test (46), le banc de test (38) est pourvu d'un trou II d'arbre de roue de test (53), un rail de coulissement de capteur de vitesse-couple de roue de test (54) est relié de manière fixe au capteur de vitesse-couple de roue de test (39), la glissière de capteur de vitesse-couple de roue de test (51) est reliée de manière coulissante au rail de coulissement de capteur de vitesse-couple de roue de test (54), le côté externe de l'arbre de roue de test (45) est pourvu d'une bride de disque de frein (55), la bride de disque de frein (55) est reliée de manière fixe au disque de frein (41), une goupille de fixation d'échantillon (57) est reliée de manière fixe au joint (48), la goupille de fixation d'échantillon (57) est reliée de manière coulissante à l'échantillon de roue de test (47), un palier de support de capteur (58) est disposé dans le support de capteur (40), l'arbre de roue de test (45) est relié de manière fixe dans le palier de support de capteur (58), le côté externe de la tige coulissante (21) est pourvu d'un interrupteur de fin de course supérieure de système de test entraîné (59), et le côté externe de la tige coulissante (21) est pourvu d'un interrupteur de fin de course inférieure de système de test entraîné (60).

8. Machine de test de frottement dynamique pour caoutchouc selon la revendication 1, **caractérisée en ce que** le système de dépoussiérage (19) comprend un collecteur de poussière électrique (61), un rouleau de brosse à poussière (62), un port d'aspiration de poussière (63), une bague de fixation de fût de dépoussiérage (64), un support de tamis filtrant (65), un fût de dépoussiérage (66), un ventilateur de dépoussiérage (67), un réducteur de moteur de dépoussiérage (68) et un moteur de dépoussiérage (69) ; le collecteur de poussière électrique (61) est disposé sur la base (16), le rouleau de brosse de dépoussiérage (62) est relié de manière rotative à la base (16), le collecteur de poussière électrique (61) est pourvu du port d'aspiration de poussière (63), le collecteur de poussière électrique (61) est pourvu du fût de dépoussiérage (66), le support de tamis filtrant (65) est disposé dans le fût de dépoussiérage (66), le fût de dépoussiérage (66) est pourvu de la bague de fixation de fût de dépoussiérage (64), le fût de dépoussiérage (66) est pourvu du ventilateur de dépoussiérage (67), le ventilateur de dépoussiérage (67) est pourvu du réducteur de moteur de dépoussiérage (68), le moteur de dépoussiérage (69) est monté sur la base (16), et un arbre de sortie du moteur de dépoussiérage (69) est relié de manière fixe à un arbre d'entrée du réducteur de moteur de dépoussiérage (68).
